# EUROPEAN PATENT SPECIFICATION

(11) **EP 2 889 661 B1**
(45) Date of publication and mention of the grant of the patent: **02.10.2019**
(21) Application number: 13306896.5
(22) Date of filing: 30.12.2013
(51) Int. Cl.: G02B 6/44, H04Q 1/06, H04Q 1/14

(54) **Distribution frame**
Verteilerrahmen
Cadre de distribution

(43) Date of publication of application: 01.07.2015
(73) Proprietor: Nexans, 92400 Courbevoie (FR)
(72) Inventor: Andersson, Per-Erik, 51434 Tranemo (SE); Josefsson, Johannes, 50760 Boräs (SE)
(74) Representative: Feray, Valérie

(56) References cited:
- EP-A2- 2 159 613
- WO-A1-2011/130000
- US-A- 4 497 411
- US-A1- 2012 294 581

## Description

### Field of the Invention

This invention pertains in general to a distribution frame system, such as a distribution frame, a distribution frame module, and appliances for interconnecting such distribution frame modules.

### Background of the Invention

In telecommunications it is since long well known to use distribution frames as passive devices which terminates cables, allowing for arbitrary interconnections to be made. These kind of distribution frames may for example be a Main Distribution Frame (MDF) located at a telephone central office terminating the cables leading to subscribers on the one hand, and cables leading to active equipment (such as DSLAMs and telephone switches) on the other. Another kind of distribution frame is an Optical Distribution Frame (ODF), in a similar manner, connecting optical fibers.

In such distribution frames, distribution frame modules are arranged, onto which specific cables are arranged, said distribution frame being adapted for receiving these modules. These modules are fixed in the frame through screw retention, or simply slid into predefined tracks. However, known solutions require time consuming fasteners during installation, such as small screws etc. Thus, there is a need for a user-friendly unit concept with few simple, reusable parts.

Also, a new unit concept using low cost production in standard machines with many costumer options would be advantageous and in particular allowing for High benefit for users and with low cost production and few parts. WO2011/130000 discloses a system for aligning and connecting adjacent distribution devices, the devices are fitted together using alignment and connection features.

EP2159613 discloses a fibre optic equipment tray in a frame with an extension rail to slidably extend or retract an extension shelf and cable management tray. The extension is made releasable by use of a plunger.

### Summary of the Invention

Accordingly, the present invention preferably seeks to mitigate, alleviate or eliminate one or more of the above-identified deficiencies in the art and disadvantages singly or in any combination and solves at least the above mentioned problems by providing a distribution frame module comprising: a first side wall configured with at least one punch bridge and a locking lever; a bottom; and a second side wall configured with at least one guide hole and a connecting edge, said guide hole and connecting edge being configured to mate with a punch bridge and a locking lever, respectively, on another distribution frame module; wherein the distribution frame module has an accommodation area for linear function inside the second side wall, and the distribution frame module can be snapped together with another distribution frame module, through interaction between said guide hole and connecting edge and said punch bridge and locking lever, respectively, on another distribution frame module.

At the end of the locking lever is an edge protruding outwards from the first side wall and with the elastic properties of the locking lever, it can snap over a connecting edge of another distribution frame module, locking the units together. The locking lever can be accessed from the side of the distribution frame module facing the operator, enabling tool-free operation of the locking and unlocking mechanism.

The material of distribution frame modules is sheet metal, such as sheet aluminum or stainless steel. The material thickness is in the range of be from 0.4 to 2 mm and a distribution frame module can be manufactured from a single piece of sheet metal.

Distribution frame modules can be interconnected with each other or connected to a male or female wall plate. Where distribution frame modules are interconnected, several units can be arranged to fit into a ODF 19" standard rack box.

A male or female wall plate is also provided, where one or several distribution frame modules can be snapped to the wall plate. The male wall plate contains at least one guide hole and a connecting edge, configured to connect to a punch bridge and a locking lever, respectively, on a distribution frame module, and the female wall plate contains at least one punch bridge and a locking lever, configured to connect to a guide hole and a connecting edge, respectively, on a distribution frame module.

Other advantageous embodiments are elucidated below and the appended patent claims.

### Brief Description of the Drawings

These and other aspects, features and advantages of which the invention is capable of will be apparent and elucidated from the following description of embodiments of the present invention, reference being made to the accompanying drawings, in which
Fig. 1 is a perspective view showing a distribution frame module;
Fig. 2 is a perspective view showing a two distribution frame modules before assembly;
Fig. 3 is a perspective view showing a male wall plate;
Fig. 4 is a perspective view showing a female wall plate;
Fig. 5 is a perspective view showing a complete optical distribution frame unit;
Fig. 6 is a perspective view showing three distribution frame modules interconnected in an ODF 19" standard rack box;
Fig. 7 is a perspective view showing a distribution frame module connected to a female wall plate; and
Fig. 8 is a perspective view showing three distribution frame modules, a female wall plate and a shield wall.

### Description of embodiments

The present invention relates to a distribution frame module 1 for allowing snap on unit installation.

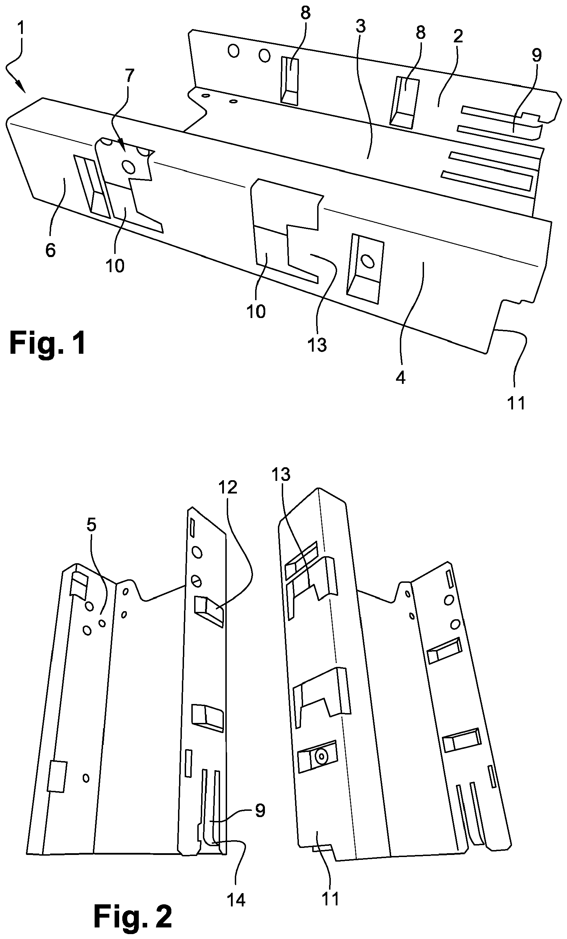

Fig. 1 shows a distribution frame module 1 consisting of a first side wall 2, a bottom 3 and a second side wall 4. The second side wall 4 consists of an inner wall 5 and one outer wall 6. The cross sectional view of the second side wall may thus be shaped like a "U", turned upside down. Within the second side wall 4 an accommodation space for linear function 7 is formed inside the second side wall 4. The free space for linear function is in the range of 5 to 30 mm, preferably 10 to 20 mm, most preferably 15 mm. The distribution frame module 1 takes the general shape of a u-shaped box with an open front, back and top.

The first side wall 2 is configured with a plurality of punch bridges 8 and a locking lever 9. The second side wall is configured with a plurality of guide holes 10 and a connecting edge 11.The punch bridges 8 are extending outwards from the first side wall, forming a female member 12. The punch bridge 8 is shaped to fit inside a guide hole 10. A guide hole 10 on the second side wall 4 contains a male member 13. The male member is preferably shaped as a capped triangle, to help guide the male member into the corresponding female member 12.

Fig. 2 shows two distribution frame modules 1 aligned besides each other before assembly. As shown the punch bridges 8 of one distribution frame module 1 corresponds to the guide holes 10 of the second distribution frame module 1. To assemble two distribution frame modules 1, the punch bridges 8 of one distribution frame module 1 are placed inside the guide holes 10 of another distribution frame module 1, after which the male members 13 can be slid into the female members 12 with a sliding movement. The lever shape of the locking lever 9 together with its material properties will give the locking lever elastic properties. At the end of the locking lever is an edge protruding outwards from the first side wall 2. When the female members 12 have slid to the bottom of the male members 13, the locking lever 9 of one distribution frame modules 1 will reach a position where it can snap over the connecting edge 11 of the other distribution frame modules 1, thus locking the units together.

The distribution frame modules 1 can be manufactured from sheet metal, such as sheet aluminum or stainless steel. The thickness may be from 0.4 to 2 mm. The production method may be calendaring, rolling, cutting, pressing, punching, stamping, drilling, or a combination of these. The sheet metal material will both provide shielding properties for the distribution frame module 1, both for optical (light) and electrical (magnetic) applications. The sheet metal material will also provide the elastic properties of the locking lever 9.

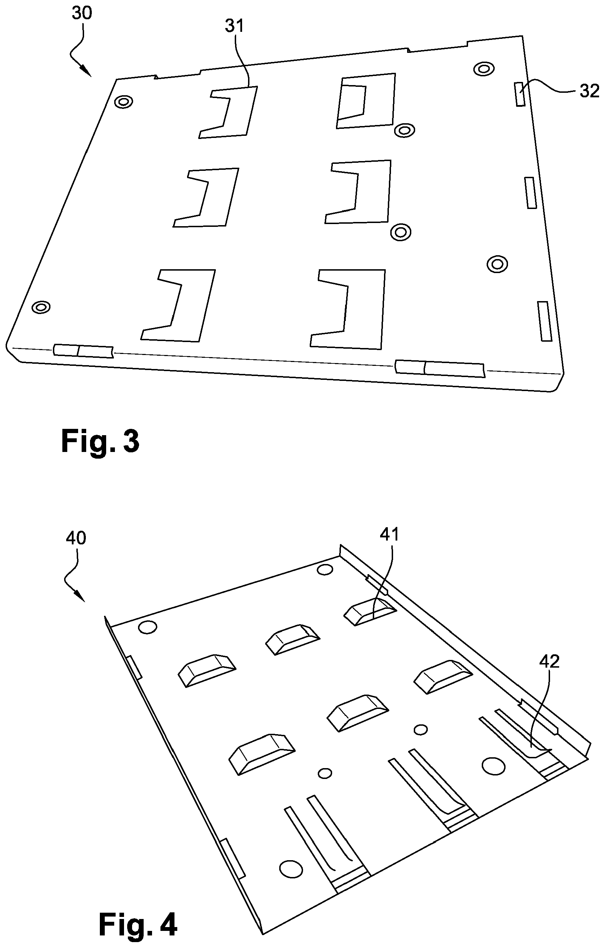

Fig 3 shows a male wall plate 30, with a plurality of guide holes 31 and connecting edges 32. The wall plate allows a multitude of distribution frame modules 1 to connect to the male wall plate 30 through the punch bridges 8 and locking lever 9 located on the first side wall 2. Thus all the distribution frame modules 1 connected to the wall plate 30 will have the same orientation.

Fig 4 shows a female wall plate 40, with a plurality of punch bridges 41 and locking levers 42. The wall plate allows a multitude of distribution frame modules 1 to connect to the female wall plate 40 through the guide holes 10 and connecting edges 11 located on the second side wall 4. Thus all the distribution frame modules 1 connected to the wall plate 40 will have the same orientation.

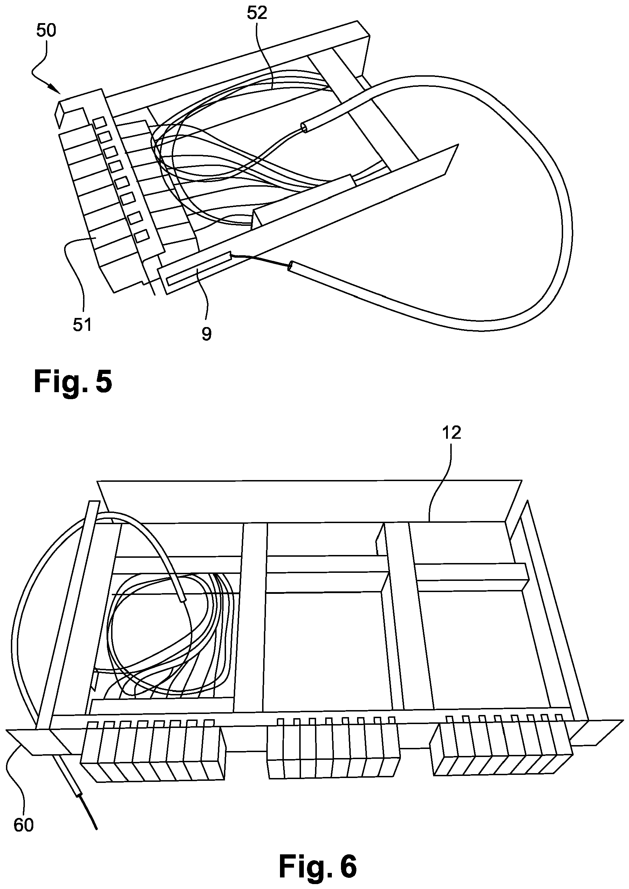

Fig 5 shows an example of a complete optical distribution frame unit 50 wherein elements for handling optical fibers 51 are mounted on the distribution frame module 1. The elements for handling optical fibers 51 comprises elements for accommodating spliced joints between optical fibers 52 and/or patch connections between optical fibers 52 and/or optical splitters and/or wave division filters are mounted in the front of the distribution frame module 1 for easy access. The locking lever 9 is located in the front of the distribution frame module 1, allowing the user to snap in or remove the distribution frame module 1 from the front without use of any tools.

Fig. 6 shows an example of three distribution frame modules 1 interconnected in an ODF 19" standard rack box 60. The distribution frame modules 1 will have the same orientation after being interconnected, allowing the user to reach the locking lever 9 of each distribution frame module 1 for easy snapping in and out a distribution frame unit 1 without use of any tools.

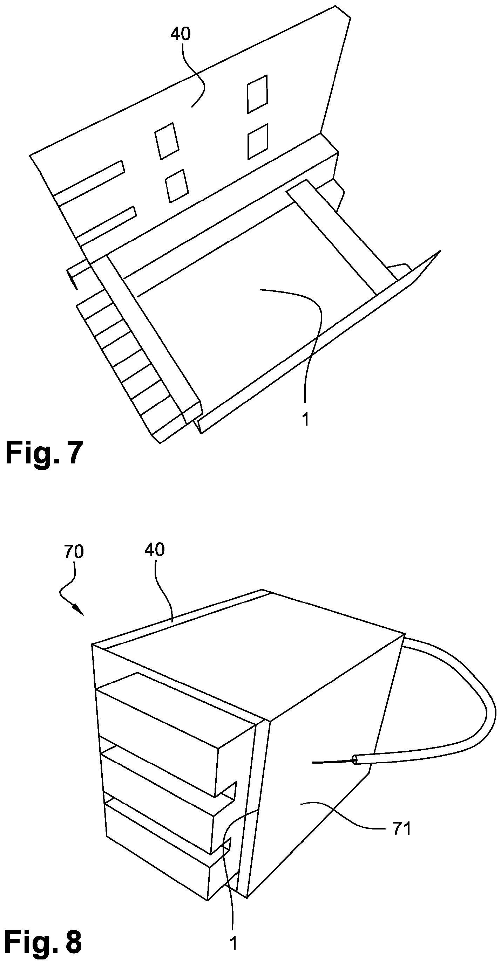

Fig. 7 shows a modular combination of a distribution frame module 1 connected to a female wall plate 40. The the locking levers 42 of the female wall plate 40 are facing the user for easy snapping in and out a distribution frame unit 1 without use of any tools.

Fig. 8 shows a modular combination 70 where three distribution frame modules 1 are connected to a female wall plate 40 and further shielded by a shield wall 71.

In one example, the height of a distribution frame module 1 can be specified in a units (U) measure or rack unit (RU), where 1U (or 1RU) is 1.75 inches from top to bottom. In such a system, the height of the distribution frame module 1 is in the range of 0.5 to 3 U, more preferable 1 to 2 U and most preferably 1 U.

In one example, the height of the distribution frame module (1) is in the range of 20 to 135 mm, preferably 40 to 50 mm, while the width of the distribution frame module (1) is in the range of 100 to 500 mm, preferably 150 to 170 mm.

The present invention has the advantage over the prior art that it provides a distribution frame module system with tool free snap on connection into several possible modular combinations, whereas known solutions requires time consuming fasteners during installation (small screws etc). Being a single piece sheet metal construction, it also provides significant advantages over prior module systems due to low cost production and few parts.

Although the present invention has been described above with reference to specific embodiments, it is not intended to be limited to the specific forms set forth herein. Rather, the invention is limited only by the accompanying claims and, other embodiments than the specific above are equally possible within the scope of these appended claims.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A distribution frame module (1) comprising:
- a first side wall (2) configured with at least one punch bridge (8) extending outwards from the first side wall (2), forming a female member (12) and a locking lever (9) comprising an edge (14) protruding outwards from the first side wall (2) at the end of said locking lever (9), said locking lever (9) having elastic properties, such that it may be biased from a resting and locking state into a tension and release state;
- a bottom (3); and
- a second side wall (4) configured with at least one guide hole (10) and a connecting edge (11), each guide hole (10) on the second side wall (4) containing a male member (13), an accommodation space (7) for linear function being formed inside the second side wall (4),
each guide hole (10) of said distribution frame module (1) being configured to mate with a corresponding punch bridge of a second distribution frame module by sliding the female member (12) of the punch bridge of the second distribution frame module to the bottom of the male member (13) of the guide hole (10) of said distribution frame module (1); and
said connecting edge (11) of said distribution frame module (1) being therefore configured to mate with a locking lever of a second distribution frame module by enabling said locking lever of the second distribution frame module to snap over the connecting edge (11) of said distribution frame module (1).

2. A distribution frame module (1) according to claim 1, wherein the locking lever (9) can be accessed from the front side of the distribution frame module (1), facing the operator, enabling the operator tool-free operation of the locking and unlocking mechanism of the distribution frame modules (1).

3. A distribution frame module (1) according to one of the preceding claims, wherein the material of distribution frame modules (1) is sheet metal, such as sheet aluminum or stainless steel.

4. A distribution frame module (1) according to one of the preceding claims, wherein the material thickness is in the range of be from 0.4 to 2 mm.

5. A distribution frame module (1) according to one of the preceding claims, wherein the distribution frame module (1) is manufactured from a single piece of sheet metal.

6. A distribution frame module (1) according to one of the preceding claims, wherein the width of the accommodation space for linear function (7) is in the range of 5 to 30 mm, preferably 10 to 20 mm, most preferably 15 mm.

7. A distribution frame module (1) according to one of the preceding claims, wherein the height of the distribution frame module (1) is in the range of 20 to 135 mm, preferably 40 to 50 mm.

8. A distribution frame module (1) according to one of the preceding claims, wherein the width of the distribution frame module (1) is in the range of 100 to 500 mm, preferably 150 to 170 mm.

9. A distribution frame module (1) according to one of the preceding claims, wherein said distribution frame module (1) is connected to a male wall plate (30).

10. A distribution frame module (1) according to one of the preceding claims, wherein said distribution frame module (1) is connected to a female wall plate (40).

## Patentansprüche

1. Verteilerrahmenmodul (1), umfassend:
- eine erste Seitenwand (2), die so konfiguriert ist, dass sich mindestens eine Brückenstanze (8) nach außen von der ersten Seitenwand (2) erstreckt und ein Innenelement (12) und einen Verriegelungshebel (9) bildet, umfassend eine Kante (14), die nach außen von der ersten Seitenwand (2) am Ende des Verriegelungshebels (9) vorspringt, wobei der Verriegelungshebel (9) elastische Eigenschaften aufweist, so dass er von einem Ruhe- und Verriegelungszustand in einen Spannungs- und Freigabezustand vorgespannt werden kann;
- einen Boden (3); und
- eine zweite Seitenwand (4), die mit mindestens einem Führungsloch (10) und einer Verbindungskante (11) konfiguriert ist, wobei jedes Führungsloch (10) auf der zweiten Seitenwand (4) ein Außenelement (13) enthält, wobei ein Aufnahmeraum (7) zur linearen Funktion innerhalb der zweiten Seitenwand (4) gebildet ist,
wobei jedes Führungsloch (10) des Verteilerrahmenmoduls (1) konfiguriert ist, um zu einer entsprechenden Brückenstanze eines zweiten Verteilerrahmenmoduls durch Gleiten des Innenelements (12) der Brückenstanze des zweiten Verteilerrahmenmoduls zum Boden des Außenelements (13) des Führungslochs (10) des Verteilerrahmenmoduls (1) zu passen; und
wobei daher die Verbindungskante (11) des Verteilerrahmenmoduls (1) konfiguriert ist, um zu einem Verriegelungshebel eines zweiten Verteilerrahmenmoduls zu passen, indem dem Verriegelungshebel des zweiten Verteilerrahmenmoduls ermöglicht wird, über die Verbindungskante (11) des Verteilerrahmenmoduls (1) zu schnappen.

2. Verteilerrahmenmodul (1) nach Anspruch 1, wobei auf den Verriegelungshebel (9) von der Vorderseite des Verteilerrahmenmoduls (1), gegenüber dem Bediener, zugegriffen werden kann, wodurch dem Bediener eine werkzeugfreie Bedienung des Verriegelungs- und Entriegelungsmechanismus der Verteilerrahmenmodule (1) ermöglicht wird.

3. Verteilerrahmenmodul (1) nach einem der vorhergehenden Ansprüche, wobei das Material der Verteilerrahmenmodule (1) Blech ist, wie z. B. Aluminiumblech oder Edelstahlblech.

4. Verteilerrahmenmodul (1) nach einem der vorhergehenden Ansprüche, wobei die Materialdicke im Bereich von 0,4 bis 2 mm liegt.

5. Verteilerrahmenmodul (1) nach einem der vorhergehenden Ansprüche, wobei das Verteilerrahmenmodul (1) aus einem einzigen Stück Blech hergestellt ist.

6. Verteilerrahmenmodul (1) nach einem der vorhergehenden Ansprüche, wobei die Breite des Aufnahmeraums zur linearen Funktion (7) im Bereich von 5 bis 30 mm, vorzugsweise 10 bis 20 mm, am bevorzugtesten 15 mm beträgt.

7. Verteilerrahmenmodul (1) nach einem der vorhergehenden Ansprüche, wobei die Höhe des Verteilerrahmenmoduls (1) im Bereich von 20 bis 135 mm, vorzugsweise 40 bis 50 mm liegt.

8. Verteilerrahmenmodul (1) nach einem der vorhergehenden Ansprüche, wobei die Breite des Verteilerrahmenmoduls (1) im Bereich von 100 bis 500 mm, vorzugsweise 150 bis 170 mm liegt.

9. Verteilerrahmenmodul (1) nach einem der vorhergehenden Ansprüche, wobei das Verteilerrahmenmodul (1) mit einer Außenwandplatte (30) verbunden ist.

10. Verteilerrahmenmodul (1) nach einem der vorhergehenden Ansprüche, wobei das Verteilerrahmenmodul (1) mit einer Innenwandplatte (40) verbunden ist.

## Revendications

1. Module de cadre de distribution (1) comprenant :
une première paroi latérale (2) configurée avec au moins un pont de poinçon (8) s'étendant vers l'extérieur à partir de la première paroi latérale (2), formant un élément femelle (12) et un levier de blocage (9) comprenant un bord (14) faisant saillie vers l'extérieur à partir de la première paroi latérale (2) à l'extrémité dudit levier de blocage (9), ledit levier de blocage (9) ayant des propriétés élastiques, de sorte qu'il peut être sollicité d'un état de repos et de blocage à un état de tension et de libération ;
un fond (3) ; et
une seconde paroi latérale (4) configurée avec au moins un trou de guidage (10) et un bord de raccordement (11), chaque trou de guidage (10) sur la seconde paroi latérale (4) comprenant un élément mâle (13), un espace de logement (7) pour la fonction linéaire qui est formé à l'intérieur de la seconde paroi latérale (4),
chaque trou de guidage (10) dudit module de cadre de distribution (1) étant configuré pour se coupler avec un pont de poinçon correspondant d'un second module de cadre de distribution en faisant coulisser l'élément femelle (12) du pont de poinçon du second module de cadre de distribution jusqu'au fond de l'élément mâle (13) du trou de guidage (10) dudit module de cadre de distribution (1) ; et
ledit bord de raccordement (11) dudit module de cadre de distribution (1) étant par conséquent configuré pour se coupler avec un levier de blocage d'un second module de cadre de distribution en permettant audit levier de blocage du second module de cadre de distribution de s'encliqueter sur le bord de raccordement (11) dudit module de cadre de distribution (1).

2. Module de cadre de distribution (1) selon la revendication 1, dans lequel on peut avoir accès au levier de blocage (9) à partir du côté avant du module de cadre de distribution (1), faisant face à l'opérateur, permettant à l'opérateur d'actionner sans outil le mécanisme de blocage et de déblocage des modules de cadre de distribution (1).

3. Module de cadre de distribution (1) selon l'une des revendications précédentes, dans lequel le matériau des modules de cadre de distribution (1) est un métal en feuille, tel qu'un aluminium en feuille ou un acier inoxydable.

4. Module de cadre de distribution (1) selon l'une des revendications précédentes, dans lequel l'épaisseur de matériau est dans la plage de 0,4 à 2 mm.

5. Module de cadre de distribution (1) selon l'une des revendications précédentes, dans lequel le module de cadre de distribution (1) est fabriqué à partir d'une seule pièce de métal en feuille.

6. Module de cadre de distribution (1) selon l'une des revendications précédentes, dans lequel la largeur de l'espace de logement pour la fonction linéaire (7) est dans la plage de 5 à 30 mm, de préférence de 10 à 20 mm, de manière préférée entre toutes de 15 mm.

7. Module de cadre de distribution (1) selon l'une des revendications précédentes, dans lequel la hauteur du module de cadre de distribution (1) est dans la plage de 20 à 135 mm, de préférence de 40 à 50 mm.

8. Module de cadre de distribution (1) selon l'une des revendications précédentes, dans lequel la largeur du module de cadre de distribution (1) est dans la plage de 100 à 500 mm, de préférence de 150 à 170 mm.

9. Module de cadre de distribution (1) selon l'une des revendications précédentes, dans lequel ledit module de cadre de distribution (1) est raccordé à une plaque de paroi mâle (30).

10. Module de cadre de distribution (1) selon l'une des revendications précédentes, dans lequel ledit module de cadre de distribution (1) est raccordé à une plaque de paroi femelle (40).
